(19) **Europäisches Patentamt**

**European Patent Office**

**Office européen des brevets**

(11) **EP 1 121 809 B1**

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(51) Int Cl.⁷: **H04N 7/30**

(21) Anmeldenummer: **99970823.3**

(22) Anmeldetag: **01.10.1999**

(86) Internationale Anmeldenummer:
**PCT/DE99/03172**

(87) Internationale Veröffentlichungsnummer:
**WO 00/024201 (27.04.2000 Gazette 2000/17)**

(54) **VERFAHREN UND ANORDNUNG ZUR CODIERUNG EINES DIGITALISIERTEN BILDES, VERFAHREN UND ANORDNUNG ZUR DECODIERUNG EINES DIGITALISIERTEN BILDES**

METHOD AND DEVICE FOR CODING A DIGITIZED IMAGE AND METHOD FOR DECODING A DIGITIZED IMAGE

PROCEDE ET DISPOSITIF POUR LE CODAGE D'UNE IMAGE NUMERISEE, PROCEDE ET DISPOSITIF POUR LE DECODAGE D'UNE IMAGE NUMERISEE

(84) Benannte Vertragsstaaten:
**DE FR GB IT NL SE**

(30) Priorität: **16.10.1998 DE 19847840**

(43) Veröffentlichungstag der Anmeldung:
**08.08.2001 Patentblatt 2001/32**

(73) Patentinhaber: **SIEMENS AKTIENGESELLSCHAFT**
**80333 München (DE)**

(72) Erfinder: **KAUP, André**
**D-85635 Höhenkirchen (DE)**

(56) Entgegenhaltungen:
- **KAUP ANDR : "Object-based texture coding of moving video in MPEG-4" IEEE TRANSACTIONS ON CIRCUITS AND SYSTEMS FOR VIDEO TECHNOLOGY, Bd. 9, Nr. 1, Februar 1999 (1999-02), Seiten 5-15, XP000802283**
- **JOO-HEE MOON ET AL: "SHAPE-ADAPTIVE REGION PARTITIONING METHOD FOR SHAPE-ASSISTED BLOCK-BASED TEXTURE CODING" IEEE TRANSACTIONS ON CIRCUITS AND SYSTEMS FOR VIDEO TECHNOLOGY,US,IEEE INC. NEW YORK, Bd. 7, Nr. 1, 1. Februar 1997 (1997-02-01), Seiten 240-246, XP000678896 ISSN: 1051-8215**

EP 1 121 809 B1

**Beschreibung**

Die Erfindung bezieht sich auf eine Anordnung und ein Verfahren zur Codierung eines digitalisierten Bildes und auf eine Anordnung und ein Verfahren zur Decodierung eines digitalisierten Bildes.

Derartige Verfahren und Anordnungen zur Codierung und Decodierung eines digitalisierten Bildes entsprechend einem der Bildcodierungsstandards H. 261 [1], H.263 [2] oder MPEG2 [3] basieren auf dem Prinzip einer blockbasierten Bildcodierung. Zur blockbasierten Bildcodierung wird, wie es aus [3] bekannt ist, das Verfahren einer blockbasierten Diskreten Cosinus Transformation (DCT) verwendet.

Ein weiterer Ansatz zur Bildcodierung entsprechend dem Bildcodierungsstandard MPEG4 ist das sogenannte Prinzip der objektbasierten Bildcodierung [3]. Bei der objektbasierten Bildcodierung erfolgt eine Segmentierung eines Bildes in Bildblöcke oder Bildbereiche entsprechend in einer Szene vorkommender Objekte und eine separate Codierung dieser Objekte.

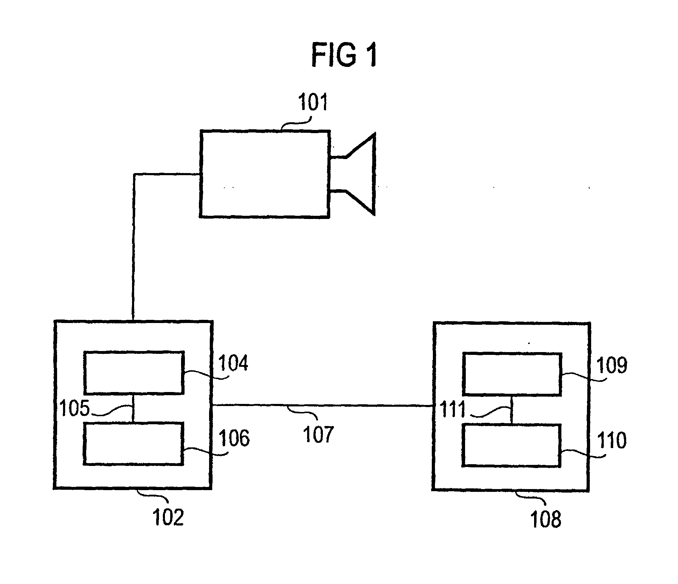

Komponenten einer üblichen Anordnung zu einer Bildcodierung und einer Bilddecodierung gehen aus Figur 1 hervor.

In Figur 1 ist eine Kamera 101 dargestellt, mit der Bilder aufgenommen werden. Die Kamera 101 kann beispielsweise eine beliebige analoge Kamera 101 sein, die Bilder einer Szene aufnimmt und die Bilder entweder in der Kamera 101 digitalisiert und die digitalisierten Bilder zu einem ersten Rechner 102, der mit der Kamera 101 gekoppelt ist, überträgt oder auch die Bilder in analoger Form zu dem ersten Rechner 102 überträgt. In dem ersten Rechner 102 werden entweder die digitalisierten Bilder verarbeitet oder die analogen Bilder in digitalisierte Bilder umgewandelt und die digitalisierten Bilder verarbeitet.

Die Kamera 101 kann auch eine digitale Kamera 101 sein, mit der direkt digitalisierte Bilder aufgenommen und dem ersten Rechner 102 zur Weiterverarbeitung zugeführt werden.

Der erste Rechner 102 kann auch als eine eigenständige Anordnung ausgestaltet sein, mit der die im Folgenden beschriebenen Verfahrensschritte durchgeführt werden, beispielsweise als eine eigenständige Computerkarte, die in einem Rechner installiert ist.

Unter dem ersten Rechner 102 ist im Allgemeinen eine Einheit zu verstehen, die eine Bildsignalverarbeitung gemäß dem im Folgenden beschriebenen Verfahren durchführen kann, beispielsweise ein mobiles Bildtelefon, in dem auch eine Bildverarbeitung durchgeführt werden kann.

Der erste Rechner 102 weist einen Prozessor 104 auf, mit dem die im Weiteren beschriebenen Verfahrensschritte der Bildcodierung und Bilddecodierung durchgeführt werden. Der Prozessor 104 ist über einen Bus 105 mit einem Speicher 106 gekoppelt, in dem eine Bildinformation gespeichert wird.

Allgemein können die im weiteren beschriebenen Verfahren sowohl in Software als auch in Hardware oder auch teilweise in Software und teilweise in Hardware realisiert werden.

Nach erfolgter Bildcodierung in dem ersten Rechner 101 und nach einer Übertragung der codierten Bildinformation über ein Übertragungsmedium 107 zu einem zweiten Rechner 108 wird in dem zweiten Rechner 108 die Bilddecodierung durchgeführt.

Der zweite Rechner 108 kann den gleichen Aufbau wie der erste Rechner 101 haben. Damit weist der zweite Rechner 108 auch einen Prozessor 109 auf, der mit einem Bus 111 mit einem Speicher 110 gekoppelt ist.

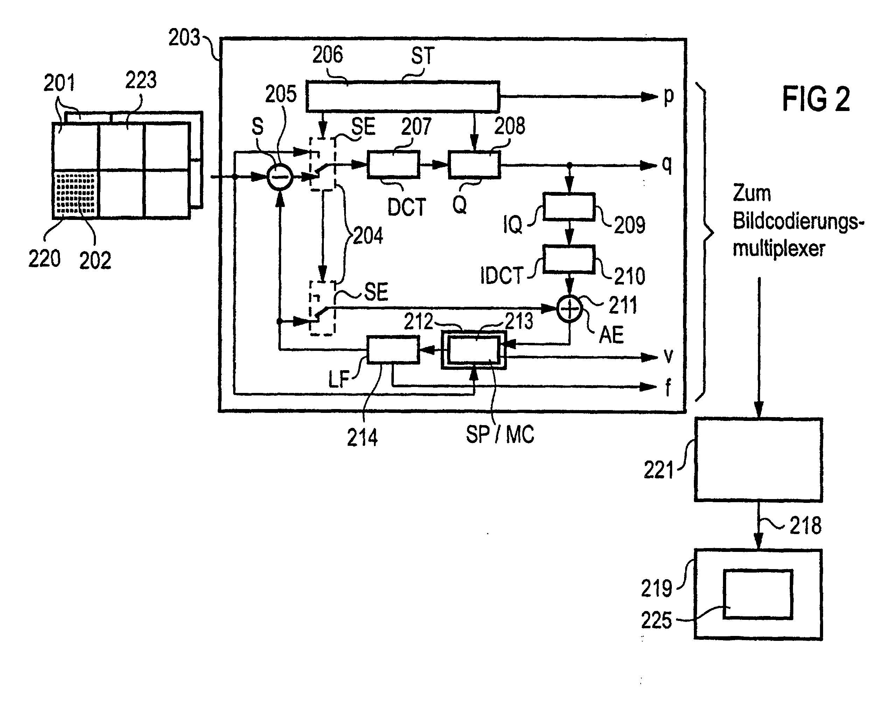

In Figur 2 ist eine mögliche Anordnung in Form eines Prinzipschaltbilds zur Bildcodierung bzw. Bilddecodierung dargestellt. Die dargestellte Anordnung kann im Rahmen einer blockbasierten und zum Teil, wie im Weiteren näher erläutert, im Rahmen einer objektbasierten Bildcodierung verwendet werden.

Bei der blockbasierten Bildcodierung wird ein digitalisiertes Bild 201 in üblicherweise quadratische Bildblöcke 220 der Größe 8x8 Bildpunkte 202 oder 16x16 Bildpunkte 202 aufgeteilt und der Anordnung 203 zur Bildcodierung zugeführt.

Einem Bildpunkt 202 ist üblicherweise Codierungsinformation eindeutig zugeordnet, beispielsweise Helligkeitsinformation (Luminanzwerte) oder Farbinformation (Chrominanzwerte).

Bei der blockbasierten Bildcodierung wird zwischen verschiedenen Bildcodierungsmodi unterschieden.

Bei einer sogenannten Intra-Bildcodierung wird jeweils das digitalisierte Bild 201 mit der den Bildpunkten 202 des digitalisierten Bildes 201 zugeordneten Codierungsinformation codiert und übertragen (I-Bild).

Bei einer sogenannten Inter-Bildcodierung wird jeweils nur eine Differenzbildinformation zweier zeitlich aufeinanderfolgender digitalisierter Bilder 201 codiert und übertragen (P-Bild, B-Bild).

Die Differenzinformation ist nur sehr klein, falls Bewegungen von Bildobjekten in den zeitlich aufeinanderfolgenden digitalisierten Bildern 201 gering sind. Sind die Bewegungen groß, so entsteht sehr viel Differenzinformation, die schwer zu codieren ist. Aus diesem Grund wird, wie es aus [3] bekannt ist, eine "Bild-zu-Bild"-Bewegung (Bewegungsschätzung) gemessen und vor der Ermittlung der Differenzinformation kompensiert (Bewegungskompensation).

Für die Bewegungsschätzung und die Bewegungskompensation, wie sie aus [3] bekannt sind, gibt es unterschiedliche Verfahren. Für die blockbasierte Bildcodierung wird meist ein sogenanntes "Block-Matching-Verfahren" eingesetzt. Es beruht darauf, daß ein zu codierender Bildblock mit gleich großen Referenzbildblöcken eines Referenzbildes verglichen wird. Als Kriterium für eine Übereinstimmungsgüte zwischen dem zu codierenden Block und jeweils einem Referenzbildblock wird üblicherweise die Summe der absoluten Differenzen einer Codierungsinformation, die jeweils jedem Bildpunkt zugeordnet wird, verwendet. Auf diese Weise wird eine Bewegungsinformation für den Bildblock, beispielsweise ein Bewegungsvektor, ermittelt, welche mit der Differenzinformation übertragen wird.

Zum Umschalten zwischen der Intra-Bildcodierung und der Inter-Bildcodierung sind zwei Schaltereinheiten 204 vorgesehen. Zur Durchführung der Inter-Bildcodierung ist eine Subtraktionseinheit 205 vorgesehen, im der die Differenz der Bildinformation zweier zeitlich aufeinanderfolgender digitalisierter Bilder 201 gebildet wird. Die Bildcodierung wird über eine Bildcodierungs-Steuereinheit 206 gesteuert. Die zu codierenden Bildblöcke 220 bzw. Differenzbildblöcke werden jeweils einer Transformationscodierungseinheit 207 zugeführt. Die Transformationscodierungseinheit 207 wendet auf die den Bildpunkten 202 zugeordnete Codierungsinformation eine Transformationscodierung, beispielsweise eine Diskrete Cosinus Transformation (DCT), an.

Allgemein kann jedoch zur Bildcodierung jede beliebige Transformationscodierung, beispielsweise eine Diskrete Sinus Transformation oder auch eine Diskrete Fourier Transformation, angewendet werden.

Durch die Transformationscodierung werden Spektralkoeffizienten gebildet. Die Spektralkoeffizienten werden in einer Quantisierungseinheit 208 quantisiert und einem Bildcodierungsmultiplexer 221 beispielsweise zu einer Kanalcodierung und/oder zu einer Entropiecodierung zugeführt. In einer internen Rekonstruktionsschleife werden die quantisierten Spektralkoeffizienten in einer inversen Quantisierungseinheit 209 invers quantisiert und in einer inversen Transformationscodierungseinheit 210 einer inversen Transformationscodierung unterzogen.

Ferner wird im Fall der Inter-Bildcodierung in einer Addiereinheit 211 unter Berücksichtigung des Bewegungsvektors die Differenz der Bildinformation der zwei zeitlich aufeinanderfolgenden digitalisierten Bilder der Bildinformation des jeweiligen zeitlich vorangegangenen Bildes hinzuaddiert. Die auf diese Weise rekonstruierten Bilder werden in einem Speicher 212 gespeichert. In dem Speicher 212 ist zur einfacheren Darstellung eine Einheit zu der Bewegungskompensation 213 symbolisch dargestellt.

Ferner ist ein Schleifenfilter (Loopfilter) 214 vorgesehen, das mit dem Speicher 212 sowie der Subtraktionseinheit 205 verbunden ist.

Dem Bildcodierungsmultiplexer 221 werden zusätzlich zu einer übertragenden Bildinformation ein Modusindex zugeführt, mit dem jeweils angegeben wird, ob eine Intra-Bildcodierung oder Inter-Bildcodierung vorgenommen wurde.

Ferner werden dem Bildcodierungsmultiplexer 221 Quantisierungsindizes für die Spektralkoeffizienten zugeführt.

Ein Bewegungsvektor wird jeweils einem Bildblock 220 und/oder einem Makroblock 223, der beispielsweise vier Bildblöcke 220 aufweist, zugeordnet und dem Bildcodierungsmultiplexer 221 zugeführt.

Ferner ist eine Informationsangabe zum Aktivieren bzw. Deaktivieren des Schleifenfilters 214 vorgesehen. Nach Übertragung der Bildinformation über ein Übertragungsmedium 218 kann in einer Anordnung 219 zur Decodierung, die beispielsweise ein Rechner sein kann, die Decodierung der übertragenen Information erfolgen. Hierzu ist in der Anordnung 219 zur Decodierung eine Bilddecodierungseinheit 225 vorgesehen, die beispielsweise den Aufbau einer Rekonstruktionsschleife der in der Figur 1 dargestellten Anordnung aufweist.

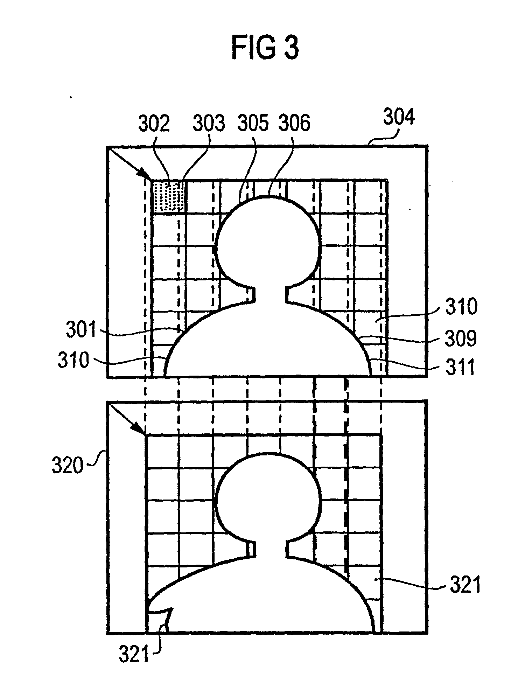

Bei einer objektbasierten Bildcodierung wird ein Bildobjekt 301 eines Bildes 304, wie in Figur 3 dargestellt, zunächst in Bildblöcke 302 einer festen Größe, beispielsweise 8x8 Bildpunkte 303, zerlegt, wobei die Bildpunkte 303, die zu dem Bildobjekt 301 gehören, als Objektbildpunkte 309 bezeichnet werden. Die Bildblöcke 302, die zumindest einen Objektbildpunkt 309 enthalten, werden als Objektbildblöcke 310 bezeichnet. Nach dieser Segmentierung befindet sich ein Teil der Objektbildblöcke 310 vollständig innerhalb des Bildobjekts 301, welches mit einer Objektkante 305 des Bildobjekts 301 berandet wird. Die Objektbildblöcke 310, die zumindest einen Teil der Objektkante 305 enthalten, werden im Weiteren auch als Randbildblöcke 306 bezeichnet.

Die Objektbildblöcke 310, die sich nach der Segmentierung vollständig innerhalb des Bildobjekts 301 befinden, können entsprechend einer oben genannten blockbasierten Transformationscodierung mit einer blockbasierten Diskreten-Cosinus-Transformation (DCT) codiert werden. Die Randbildblöcke 306 enthalten jedoch nur teilweise eine Bildinformation und müssen mit einem besonderen Verfahren codiert werden.

Gemäß [4] wird die Bildinformation innerhalb des Randbildblocks 306 durch ein geeignetes Extrapolationsverfahren auf die Fläche des vollständigen Randbildblocks 306 ergänzt. Diese Vorgehensweise wird als "padding" bezeichnet. Die ergänzte Fläche wird anschließend mit einer zweidimensionalen Diskreten Cosinus Transformation (DCT) codiert.

Ein anderes Verfahren zur Codierung eines Randbildblocks, wie es aus [5] bekannt ist, ist eine formangepaßte Transformationscodierung.

Bei dem Verfahren der formangepaßten Transformationscodierung gemäß [5] werden diejenigen Bildpunkte 303 eines Randbildblocks 306 des Bildobjekts 301, die keine Objektbildpunkte 309 sind, ausgeblendet. Auf die verbleibenden Objektbildpunkte 309 wird eine orthonormalisierte formangepaßte Transformationscodierung gemäß [5] angewendet.

Spektralkoeffizienten $c_j$ der zu transformierenden Objektbildpunkte 309 werden nach folgender Vorschrift gebildet:

$$c_j = \sqrt{\frac{2}{N}} * [\underline{DCT - N}(p, k)] * x_j \qquad (1)$$

wobei mit

- N eine Größe des zu transformierenden Bildvektors bezeichnet wird, in dem die transformierenden Bildpunkte enthalten sind;
- [DCT-N(p,k)] eine Transformationsmatrix der Größe NxN bezeichnet wird;
- p,k Indizes bezeichnet werden mit p,k $\in$ [0, N-1].

Die Vorgehensweise bei der objektbasierten Bildcodierung hat zur Folge, daß auch bei einer nur leichten Verschiebung der relativen Lage einer Objektkante des zu codierenden Objekts 301 bezüglich des jeweils zugeordneten Bildes 302 oder 320 in den zwei zeitlich aufeinanderfolgenden Bilder 304 und 320 sich die relative Lage der Objektbildblöcke 310 und 321 bezüglich des jeweils zugeordneten Bildes 304 oder 320 ändert. Dies hat zur Folge, daß bei einer Bewegungsschätzung und einer Bewegungskompensation ein zu codierender Objektbildblock 310 und 321 nicht mehr im zeitlich vorangehenden Bild 320 gefunden werden kann, da der Objektbildblock 310 im zeitlich vorangehenden Bild auf einer Blockkante 311 liegt.

Dieser Effekt führt dazu, daß Objektbildblöcke 321 mit einer Restfehlerbildcodierung verarbeitet werden müssen, um Sprungstellen in der Bildinformation, wie sie an einer Blockkante 311 auftritt, zu kompensieren. Dies führt zu einer Erhöhung einer zur Übertragung der Bilder erforderlichen Datenrate.

Somit liegt der Erfindung das Problem zugrunde, ein Verfahren zur Bildcodierung und ein Verfahren zur Bilddecodierung und eine Anordnung zur Bildcodierung und eine Anordnung zur Bilddecodierung anzugeben, mit denen eine hinsichtlich einer notwendigen Restfehlerbildcodierung und einer zu übertragenen Datenrate verbesserte Bildcodierung erreicht wird.

Das Problem wird durch die Verfahren mit den Merkmalen gemäß den unabhängigen Ansprüchen sowie den Anordnungen mit den Merkmalen gemäß den unabhängigen Ansprüchen gelöst.

Bei dem Verfahren zur Codierung eines digitalisierten Bildes, zu dem es ein zeitlich vorangehendes Bild gibt, mit Bildpunkten, das mindestens ein Bildobjekt mit zugehörigen Objektbildpunkten aufweist, wobei die Objektbildpunkte in dem Objekt liegen, wird das Bild zumindest teilweise in Bildblöcke aufgeteilt und in dem Bild das Bildobjekt ermittelt. Ferner werden Objektbildblöcke ermittelt, wobei die Objektbildblöcke die Bildblöcke sind, die zumindest einen Objektbildpunkt aufweisen. Die Ermittlung der Objektbildblöcke wird derart durchgeführt, daß mindestens eine relative Lage eines Randes eines Objektbildblocks des Bildes bezüglich des Bildes mit einer relativen Lage eines Randes eines Objektbildblocks des zeitlich vorangehenden Bildes bezüglich des zeitlich vorangehenden Bildes übereinstimmt. Die Codierung wird unter Verwendung der Objektbildblöcke durchgeführt.

Bei dem Verfahren zur Decodierung eines digitalisierten Bildes, zu dem es ein zeitlich vorangehendes Bild gibt, mit Bildpunkten, das mindestens ein Bildobjekt mit zugehörigen Objektbildpunkten aufweist, wobei die Objektbildpunkte in dem Objekt liegen, wird das Bild durch folgendes Verfahren codiert:

Das Bild wird zumindest teilweise in Bildblöcke aufgeteilt und in dem Bild wird das Bildobjekt ermittelt. Ferner werden Objektbildblöcke ermittelt, wobei die Objektbildblöcke die Bildblöcke sind, die zumindest einen Objektbildpunkt aufweisen. Die Ermittlung der Objektbildblöcke wird derart durchgeführt, daß mindestens eine relative Lage eines Randes eines Objektbildblocks des Bildes bezüglich des Bildes mit einer relativen Lage eines Randes eines Objektbildblocks des zeitlich vorangehenden Bildes bezüglich des zeitlich vorangehenden Bildes übereinstimmt. Die Codierung wird unter Verwendung der Objektbildblöcke durchgeführt.

Ferner wird die Decodierung unter Verwendung eines zu der Codierung inversen Verfahrens durchgeführt.

Bei der Anordnung zur Codierung eines digitalisierten Bildes, zu dem es ein zeitlich vorangehendes Bild gibt, mit Bildpunkten, das mindestens ein Bildobjekt mit zugehörigen Objektbildpunkten aufweist, wobei die Objektbildpunkte in dem Objekt liegen, ist ein Prozessor vorgesehen ist, der derart eingerichtet ist, daß folgende Schritte durchführbar sind:

Das Bild wird zumindest teilweise in Bildblöcke aufgeteilt und in dem Bild wird das Bildobjekt ermittelt. Ferner werden Objektbildblöcke ermittelt, wobei die Objektbildblöcke die Bildblöcke sind, die zumindest einen Objektbildpunkt aufweisen. Die Ermittlung der Objektbildblöcke wird derart durchgeführt, daß mindestens eine relative Lage eines Randes eines Objektbildblocks des Bildes bezüglich des Bildes mit einer relativen Lage eines Randes eines Objektbildblocks des zeitlich vorangehenden Bildes bezüglich des zeitlich vorangehenden Bildes übereinstimmt. Die Codierung wird unter Verwendung der Objektbildblöcke durchgeführt.

Bei der Anordnung zur Decodierung eines digitalisierten Bildes, zu dem es ein zeitlich vorangehendes Bild gibt, mit Bildpunkten, das mindestens ein Bildobjekt mit zugehörigen Objektbildpunkten aufweist, wobei die Objektbildpunkte in dem Objekt liegen, wird das Bild durch folgendes Verfahren codiert:

Das Bild wird zumindest teilweise in Bildblöcke aufgeteilt und in dem Bild wird das Bildobjekt ermittelt. Ferner werden Objektbildblöcke ermittelt, wobei die Objektbildblöcke die Bildblöcke sind, die zumindest einen Objektbildpunkt aufweisen. Die Ermittlung der Objektbildblöcke wird derart durchgeführt, daß mindestens eine relative Lage eines Randes eines Objektbildblocks des Bildes bezüglich des Bildes mit einer relativen Lage eines Randes eines Objektbildblocks des zeitlich vorangehenden Bildes bezüglich des zeitlich vorangehenden Bildes übereinstimmt. Die Codierung wird unter Verwendung der Objektbildblöcke durchgeführt.

Ferner weist die Anordnung zur Decodierung des digitalisierten Bildes einen Prozessor auf, der derart eingerichtet ist, daß die Decodierung unter Verwendung eines zu der Codierung inversen Verfahrens durchführbar ist.

Besonders vorteilhaft bei der Erfindung ist, daß durch die dargestellte Vorgehensweise eine Reduktion der Restfehlerbildcodierung im Rahmen einer blockbasierten und/oder objektbasierten Bildcodierung für eine Sprungstelle in der Bildinformation, welche Sprungstelle an einer Blockkante auftritt, erreicht wird. Damit wird die für die Beschreibung eines Bildes erforderliche Datenmenge reduziert.

Bei einer gleichbleibenden Datenrate kann somit mehr Codierungsinformation übertragen werden. Dadurch wird die Bildqualität der übertragenen Bilder erhöht. Bei einer gleichbleibenden Bildqualität der übertragenden Bilder führt die reduzierte Datenmenge zu einer reduzierten Datenrate und damit zu einer verbesserten Codierungseffizienz.

Bevorzugte Weiterbildungen der Erfindung ergeben sich aus den abhängigen Ansprüchen.

In einer Weiterbildung wird für die Codierung eine hybride Transformationscodierung und/oder für die Decodierung eine inverse Transformationscodierung eingesetzt.

Ein bevorzugtes Verfahren, das für die Transformationscodierung bzw. inverse Transformationscodierung verwendet wird, ist eine Diskrete-Cosinus-Transformation (DCT) bzw. eine Inverse Diskrete-Cosinus-Transformation (IDCT).

Ein Ausführungsbeispiel der Erfindung ist in Figuren dargestellt und wird im Weiteren näher erläutert.

Es zeigen:

Figur 1   Anordnung zur Bildcodierung bzw. Bilddecodierung mit einer Kamera, zwei Rechnern und einem Übertragungsmedium

Figur 2   Skizze einer Anordnung zur blockbasierten Bildcodierung und Bilddecodierung

Figur 3   symbolhafte Darstellung zweier zeitlich aufeinanderfolgender Bilder mit jeweils einem Bildobjekt, mit Bildpunkten, mit Objektbildpunkten, mit Bildblöcken, mit Objektbildblökken und mit Randbildblöcken

Figur 4   symbolhafte Darstellung zweier zeitlich aufeinanderfolgender Bilder mit einer "festen Segmentierung" von Objektbildblöcken und Bildblöcken

In Figur 1 ist eine Anordnung zu einer Bildcodierung und einer Bilddecodierung dargestellt.

In Figur 1 ist eine Kamera 101 dargestellt, mit der Bilder aufgenommen werden. Die Kamera 101 ist eine analoge Kamera 101, die Bilder einer Szene aufnimmt, und die Bilder in analoger Form zu einem ersten Rechner 102 überträgt. In dem ersten Rechner 102 werden die analogen Bilder in digitalisierte Bilder 103 umgewandelt und die digitalisierten Bilder 103 verarbeitet.

Der erste Rechner 102 ist als eine eigenständige Anordnung in Form einer eigenständigen Computerkarte, die in den ersten Rechner 102 installiert ist, ausgestaltet, mit welcher Computerkarte die im Folgenden beschriebenen Verfahrensschritte durchgeführt werden.

Der erste Rechner 102 weist einen Prozessor 104 auf, mit dem die im Weiteren beschriebenen Verfahrensschritte der Bildcodierung durchgeführt werden. Die Prozessoreinheit 104 ist über einen Bus 105 mit einem Speicher 106 gekoppelt, in dem eine Bildinformation gespeichert wird.

Das im Weiteren beschriebene Verfahren zu der Bildcodierung ist in Software realisiert. Sie ist in dem Speicher 106 gespeichert und wird von dem Prozessor 104 ausgeführt.

Nach erfolgter Bildcodierung im dem ersten Rechner 101 und nach einer Übertragung der codierten Bildinformation über ein Übertragungsmedium 107 zu einem zweiten Rechner 108, wird in dem zweiten Rechner 108 die Bilddecodierung durchgeführt.

Der zweite Rechner 108 hat den gleichen Aufbau wie der erste Rechner 101. Der zweite Rechner 108 weist auch einen Prozessor 109 auf, welcher Prozessor mit einem Bus 111 mit einem Speicher 110 gekoppelt ist.

Das im weiteren beschriebene Verfahren zu der Bilddecodierung ist in Software realisiert. Sie ist in dem Speicher 110 gespeichert und wird von dem Prozessor 109 ausgeführt.

Das Verfahren zu einer Bewegungsschätzung und das Verfahren zu einer Bewegungskompensation, wie sie aus [5] bekannt sind, werden sowohl im Rahmen der Bildcodierung als auch im Rahmen der Bilddecodierung eingesetzt.

Im Rahmen der objektbasierten Bildcodierung von den digitalisierten Bilder, die Bilder einer zeitlichen Bildsequenz sind, erfolgt eine Unterteilung (Segmentierung) eines digitalisierten Bildes im Allgemeinen entsprechend der in einer Szene vorkommenden Bildobjekte sowie eine separate Codierung der Bildobjekte.

Diese Art der Segmentierung wird für das zeitlich erste Bild der Bildsequenz durchgeführt. Die Bildcodierung des zeitlich ersten Bildes erfolgt nach dem Intra-Bildcodierungs-Modus.

Jedes Bildobjekt 301 eines Bildes 304 wird zunächst in Bildblöcke 302 einer festen Größe, beispielsweise 8x8 Bildpunkte 303, zerlegt, wobei die Bildpunkte 303, die zu dem Bildobjekt 301 gehören, als Objektbildpunkte 309 bezeichnet werden. Die Bildblöcke 302, die zumindest einen Objektbildpunkt 309 enthalten, werden als Objektbildblöcke 310 bezeichnet. Nach dieser Segmentierung befindet sich ein Teil der Objektbildblöcke 310 vollständig innerhalb des Bildobjekts 301, welches mit einer Objektkante 305 des Bildobjekts 301 berandet wird. Die Objektbildblöcke 310, die zumindest einen Teil der Objektkante 305 enthalten, werden im Weiteren auch als Randbildblöcke 306 bezeichnet.

Die Objektbildblöcke 310, die sich nach der Segmentierung vollständig innerhalb des Bildobjekts 301 befinden, werden entsprechend der oben genannten blockbasierten Transformationscodierung mit einer blockbasierten Diskreten-Cosinus-Transformation (DCT) codiert.

Die Randbildblöcke 306 enthalten jedoch nur teilweise eine Bildinformation und müssen mit einem besonderen Verfahren codiert werden.

Das Verfahren zur Codierung eines Randbildblocks, wie es aus [5] bekannt ist, ist eine formangepaßte Transformationscodierung.

Bei dem Verfahren der formangepaßten Transformationscodierung gemäß [5] werden diejenigen Bildpunkte 303 eines Randbildblocks 306 des Bildobjekts 301, die keine Objektbildpunkte 309 sind, ausgeblendet. Auf die verbleibenden Objektbildpunkte 309 wird eine formangepaßte Transformationscodierung, wie sie aus [5] bekannt ist, angewendet.

Für die Codierungsinformation der Objektbildpunkte 309 werden Spektralkoeffizienten $c_j$ der zu transformierenden Objektbildpunkte $x_j$ 309 nach folgender Vorschrift gebildet:

$$c_j = 2 * \frac{2}{N} * [\underline{DCT - N}(p, k)] * x_j \qquad (2)$$

wobei mit

- N eine Größe des zu transformierenden Bildvektors bezeichnet wird, in dem die transformierenden Bildpunkte enthalten sind;
- $[\underline{DCT-N}(p,k)]$ eine Transformationsmatrix der Größe NxN bezeichnet wird;
- p,k Indizes bezeichnet werden mit $p,k \in [0, N-1]$.

Als formangepaßte Transformationscodierung wird die formangepaßte Diskrete-Cosinus-Transformation (DCT) verwendet.

Für die nach dem ersten Bild zeitlich nachfolgenden Bilder wird die Bildcodierung nach dem Inter-Bildcodierungs-Modus durchgeführt.

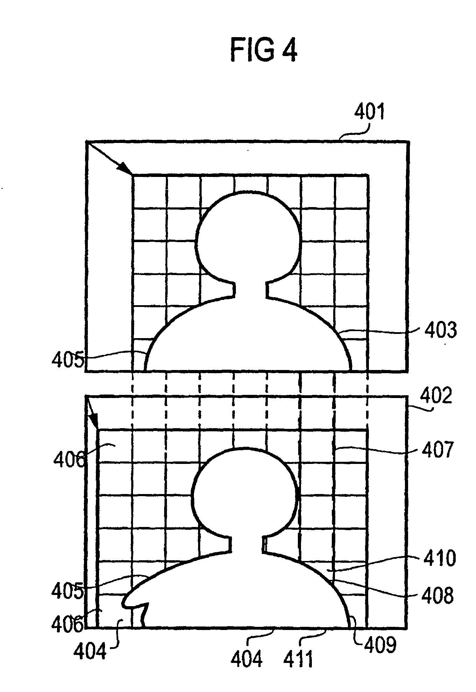

Die Segmentierung dieser Bilder, die in Figur 4 beispielhaft an zwei zeitlich aufeinanderfolgenden Bilder 401 und 402 dargestellt ist, erfolgt jeweils derart, daß die relative Lage jeweils eines Objektbildblocks 403 des zeitlich vorgehenden Bildes 401 bezüglich des zeitlich vorangehenden Bildes 401 mit der relativen Lage eines entsprechenden Objektbildblocks 404 des aktuell zu übertragenden Bildes 402 bezüglich des aktuell zu übertragenden Bildes 402 identisch ist. Damit ergibt sich eine zumindest teilweise feste Segmentierung in den beiden zeitlich aufeinanderfolgenden Bilder, wobei die relative Lage der Objektbildblöcke 404 aktuell zu übertragenden Bildes 402 bezüglich des zugehörigen Bildes 402 mit der relativen Lage der Objektbildblöcke 403 des zeitlich vorausgehenden Bildes 401 bezüglich des zugehörigen Bildes 401 zumindest teilweise identisch ist.

Unter Berücksichtigung der Größe des Bildobjekts 405 des aktuell zu übertragenden Bildes 402 werden im aktuell zu übertragenden Bild 402 weitere Bildblöcke 406 und Objektbildblöcke 404 bestimmt bzw. im aktuellen Bild 402 die eingeteilten Bildblöcke 406 und Objektbildblöcke 404 derart angepaßt, so daß sowohl das Bildobjekt 405 komplett durch Objektbildblöcke 404 abgedeckt ist als auch alle eingeteilten Bildblöcke 406 und Objektbildblöcke 404 des aktuell zu übertragenden Bildes 402 eine rechteckige Fläche 407 beschreiben.

Nach dieser Segmentierung des aktuell zu übertragenden Bildes 402 befindet sich ein Teil der Objektbildblöcke 404 vollständig innerhalb des Bildobjekts 405, welches mit einer Objektkante 408 (Objektrand) des Bildobjekts 405 berandet wird. Die Objektbildblöcke 404, die zumindest einen Teil der Objektkante 408 enthalten, werden im Weiteren auch als Randbildblöcke 409 bezeichnet.

Die Objektbildblöcke 404, die sich nach der Segmentierung vollständig innerhalb des Bildobjekts 405 befinden, werden entsprechend der oben genannten blockbasierten Transformationscodierung mit einer blockbasierten Diskreten-Cosinus-Transformation (DCT) codiert.

Die Randbildblöcke 409 sind jedoch nur teilweise mit einer Bildinformation gefüllt und müssen mit einem besonderen Verfahren codiert werden.

Das Verfahren zur Codierung eines Randbildblocks 409, wie es aus [5] bekannt ist, ist eine formangepaßte Transformationscodierung.

Bei dem Verfahren der formangepaßten Transformationscodierung gemäß [5] werden diejenigen Bildpunkte 410 eines Randbildblocks 409 des Bildobjekts 405, die keine Objektbildpunkte 411 sind, ausgeblendet. Auf die verbleibenden Objektbildpunkte 411 wird eine formangepaßte Transformationscodierung, wie sie aus [5] bekannt ist, angewendet.

Für die Codierungsinformation der Objektbildpunkte 411 werden Spektralkoeffizienten $c_j$ der zu transformierenden Objektbildpunkte $x_j$ 411 nach folgender bekannter Vorschrift gebildet:

$$c_j = \sqrt{\frac{2}{N}} * [\underline{DCT - N}(p, k)] * x_j \qquad (3)$$

Als formangepaßte Transformationscodierung wird die formangepaßte Diskrete-Cosinus-Transformation (DCT) verwendet.

Nach Übertragung der codierten Bildinformation, d. h. nach Quantisierung und Entropiecodierung der übertragenen Bildinformation gemäß [5] über das Übertragungsmedium 107, wird eine Bilddecodierung durchgeführt.

Bei der Bilddecodierung wird eine Entropiedecodierung und eine inverse Quantisierung gemäß [5] durchgeführt.

Dazu werden die Spektralkoeffizienten $c_j$ der inversen formangepaßten Transformationscodierung (IDCT) zugeführt.

Bei der inversen formangepaßten Transformationscodierung im Rahmen der Bildcodierung im Inter-Bildcodierungsmodus werden die Objektbildpunkte $x_j$ aus den Spektralkoeffizienten $c_j$ nach folgender Vorschrift (4) gebildet:

$$x_j = \sqrt{\frac{2}{N}} * [\underline{DCT - N(p, k)}]^{-1} * c_j \qquad (4)$$

wobei mit:

- N eine Größe des zu transformierenden Bildvektors bezeichnet wird, in dem die transformierenden Bildpunkte enthalten sind;
- $[\underline{DCT-N}(p,k)]$ eine Transformationsmatrix der Größe NxN bezeichnet wird;
- p,k Indizes bezeichnet werden mit $p,k \in [0, N-1]$;
- mit $()^{-1}$ eine Inversion einer Matrix bezeichnet wird.

Bei der inversen formangepaßten Transformationscodierung im Rahmen der Bildcodierung im Intra-Bildcodierungsmodus werden die Objektbildpunkte $x_j$ aus den Spektralkoeffizienten $c_j$ nach folgender Vorschrift (5) gebildet:

$$x_j = \frac{1}{2} * [\underline{DCT - N(p, k)}]^{-1} * c_j \qquad (5)$$

Unter Verwendung der ermittelten Objektbildpunkte $x_j$ wird das decodierte Bild bestimmt.

Im Folgenden werden Alternativen des Ausführungsbeispiels angegeben: Bei einer Anordnung zur Bildcodierung kann eine Transformationscodierungseinheit (DCT) zur formangepaßten Transformation der Objektbildpunkte vorgesehen werden, wobei die Transformationscodierungseinheit (DCT) derart ausgestaltet ist, daß die im Rahmen des Verfahrens zur Bildcodierung dargestellten Verfahrensschritte in der Transformationscodierungseinheit (DCT) realisiert sind.

Bei einer Anordnung zur Bilddecodierung kann eine inverse Transformationscodierungseinheit (IDCT) zur inversen formangepaßten Transformation der Objektbildpunkte vorgesehen werden, wobei die inverse Transformationscodierungseinheit (IDCT) derart ausgestaltet ist, daß die im Rahmen des Verfahrens zur Bilddecodierung dargestellten Verfahrensschritte in der inversen Transformationscodierungseinheit (IDCT) realisiert sind.

Im Rahmen dieses Dokuments wurden folgende Dokumente zitiert:

[1] D. Le Gall, "The Video Compression Standard for Multimedia Applications", Communications of ACM, Vol. 34, No. 4, S. 47-58, April 1991

[2] G. Wallace, "The JPEG Still Picture Compression Standard", Communications of ACM, Vol.34, No. 4, S. 31-44, April 1991

[3] De Lameillieure, J., et al., "MPEG-2-Bildcodierung für das digitale Fernsehen", in FERNSEH- UND KINO-TECHNIK, 48. Jahrgang, Nr. 3/1994, 1994

[4] DE 197 03 670 A1

[5] DE 197 03 672 A1

**Patentansprüche**

1. Verfahren zur Codierung eines digitalisierten Bildes, zu dem es ein zeitlich vorangehendes Bild gibt, mit Bildpunkten, das mindestens ein Bildobjekt mit zugehörigen Objektbildpunkten aufweist, wobei die Objektbildpunkte in dem Objekt liegen,

   a) bei dem das Bild zumindest teilweise in Bildblöcke aufgeteilt wird;
   b) bei dem in dem Bild das Bildobjekt ermittelt wird;
   c) bei dem mindestens ein Objektbildblock ermittelt wird, wobei der Objektbildblock ein Bildblock ist, der zumindest einen Objektbildpunkt aufweist;
   d) bei dem die Ermittlung des Objektbildblocks derart durchgeführt wird, dass eine relative Lage eines Randes eines Objektbildblocks des Bildes bezüglich des Bildes mit einer relativen Lage eines Randes eines Objektbildblocks des zeitlich vorangehenden Bildes bezüglich des zeitlich vorangehenden Bildes übereinstimmt;
   e) bei dem die Codierung unter Verwendung des Objektbildblocks durchgeführt wird.

2. Verfahren nach Anspruch 1,
   bei dem das Bild mehrere Bildobjekte aufweist.

3. Verfahren nach Anspruch 1 oder 2,
   bei dem mehrere relative Lagen eines Randes eines Objektbildblocks des Bildes bezüglich des Bildes mit jeweils einer relativen Lage eines Randes eines Objektbildblocks des zeitlich vorangehenden Bildes bezüglich des zeitlich vorangehenden Bildes übereinstimmen.

4. Verfahren nach einem der Ansprüche 1 bis 3,
   bei dem zu der Codierung eine hybride Transformationscodierung eingesetzt wird.

**5.** Verfahren zur Codierung und zur Decodierung eines digitalisierten Bildes, zu dem es ein zeitlich vorangehendes Bild gibt, mit Bildpunkten, das mindestens ein Bildobjekt mit zugehörigen Objektbildpunkten aufweist, wobei die Objektbildpunkte in dem Objekt liegen, bei dem das Bild gemäß Anspruch 1 codiert wird,
und bei dem die Decodierung unter Verwendung eines zu der Codierung inversen Verfahrens durchgeführt wird.

**6.** Verfahren nach Anspruch 5,
bei dem das Bild mehrere Bildobjekte aufweist.

**7.** Verfahren nach Anspruch 5 oder 6,
bei dem mehrere relative Lagen eines Randes eines Objektbildblocks des Bildes bezüglich des Bildes mit jeweils einer relativen Lage eines Randes eines Objektbildblocks des zeitlich vorangehenden Bildes bezüglich des zeitlich vorangehenden Bildes übereinstimmen.

**8.** Verfahren nach einem der Ansprüche 5 bis 7,
bei dem zur Decodierung eine inverse Transformationscodierung eingesetzt wird.

**9.** Anordnung zur Durchführung des Verfahrens nach Anspruch 1.

**10.** Anordnung nach Anspruch 9,
bei der das Bild mehrere Bildobjekte aufweist.

**11.** Anordnung nach Anspruch 9 oder 10,
bei dem mehrere relative Lagen eines Randes eines Objektbildblocks des Bildes bezüglich des Bildes mit jeweils einer relativen Lage eines Randes eines Objektbildblocks des zeitlich vorangehenden Bildes bezüglich des zeitlich vorangehenden Bildes übereinstimmen.

**12.** Anordnung zur Durchführung des Verfahrens nach Anspruch 5.

**13.** Anordnung nach Anspruch 12,
bei der das Bild mehrere Bildobjekte aufweist.

**14.** Anordnung nach Anspruch 12 oder 13,
bei dem mehrere relative Lagen eines Randes eines Objektbildblocks des Bildes bezüglich des Bildes mit jeweils einer relativen Lage eines Randes eines Objektbildblocks des zeitlich vorangehenden Bildes bezüglich des zeitlich vorangehenden Bildes übereinstimmen.

**15.** Codiertes digitalisiertes Bild mit Bildpunkten, das mindestens ein Bildobjekt mit zugehörigen Objektbildpunkten aufweist, wobei die Objektbildpunkte in dem Objekt liegen, welches codierte digitalisierte Bild durch Codierung eines zu codierenden digitalisierten Bildes erzeugt wurde, zu welchem zu codierenden digitalisierten Bild es ein zeitlich vorangehendes Bild gibt, und welches codierte digitalisierte Bild derart codiert wurde, dass

a) das zu codierende Bild zumindest teilweise in Bildblöcke aufgeteilt wird;
b) in dem zu codierenden Bild das Bildobjekt ermittelt wird;
c) mindestens ein Objektbildblock ermittelt wird, wobei der Objektbildblock ein Bildblock ist, der zumindest einen Objektbildpunkt aufweist;
d) bei dem die Ermittlung des Objektbildblocks derart durchgeführt wird, dass eine relative Lage eines Randes eines Objektbildblocks des zu codierenden Bildes bezüglich des Bildes mit einer relativen Lage eines Randes eines Objektbildblocks des zeitlich vorangehenden Bildes bezüglich des zeitlich vorangehenden Bildes übereinstimmt;
e) bei dem die Codierung unter Verwendung des Objektbildblocks durchgeführt wird.

**16.** Verwendung des codierten digitalisierten Bildes nach Anspruch 15 zu einer Bearbeitung.

**17.** Verwendung des codierten digitalisierten Bildes nach Anspruch 15 zu einer Decodierung.

**18.** Verwendung des codierten digitalisierten Bildes nach Anspruch 15 zu einer Übertragung.

**Claims**

**1.** Method for coding a digitized picture for which a chronologically preceding picture exists, with pixels, which has at least one picture object with associated object pixels, the object pixels being located in the object,

a) in which the picture is at least partly divided into picture blocks;
b) in which the picture object is determined in the picture;
c) in which at least one object picture block is determined, the object picture block being a picture block which has at least one object pixel;
d) in which the determination of the object picture block is carried out in such a way that a relative position of an edge of an object picture block of the picture in relation to the picture corresponds to a relative position of an edge of an object picture block of the chronologically preceding picture in relation to the chronologically preceding picture;

e) in which the coding is carried out using the object picture block.

2. Method according to Claim 1,
in which the picture has a plurality of picture objects.

3. Method according to Claim 1 or 2,
in which a plurality of relative positions of an edge of an object picture block of the picture in relation to the picture correspond to a respective relative position of an edge of an object picture block of the chronologically preceding picture in relation to the chronologically preceding picture.

4. Method according to one of Claims 1 to 3,
in which a hybrid transform coding is used for the coding.

5. Method for coding and for decoding a digitized picture for which a chronologically preceding picture exists, with pixels, which has at least one picture object with associated object pixels, the object pixels being located in the object, in which the picture is coded in accordance with Claim 1,
and in which the decoding is carried out using a method which is the inverse of the coding.

6. Method according to Claim 5,
in which the picture has a plurality of picture objects.

7. Method according to Claim 5 or 6,
in which a plurality of relative positions of an edge of an object picture block of the picture in relation to the picture correspond to a respective relative position of an edge of an object picture block of the chronologically preceding picture in relation to the chronologically preceding picture.

8. Method according to one of Claims 5 to 7,
in which an inverse transform coding is used for the decoding.

9. Arrangement for carrying out the method according to Claim 1.

10. Arrangement according to Claim 9,
in which the picture has a plurality of picture objects.

11. Arrangement according to Claim 9 or 10,
in which a plurality of relative positions of an edge of an object picture block of the picture in relation to the picture correspond to a respective relative position of an edge of an object picture block of the chronologically preceding picture in relation to the chronologically preceding picture.

12. Arrangement for carrying out the method according to Claim 5.

13. Arrangement according to Claim 12,
in which the picture has a plurality of picture objects.

14. Arrangement according to Claim 12 or 13,
in which a plurality of relative positions of an edge of an object picture block of the picture in relation to the picture correspond to a respective relative position of an edge of an object picture block of the chronologically preceding picture in relation to the chronologically preceding picture.

15. Coded digitized picture with pixels, which has at least one picture object with associated object pixels, the object pixels being located in the object, which coded digitized picture has been produced by coding a digitized picture to be coded, for which digitized picture to be coded a chronologically preceding picture exists, and which coded digitized picture has been coded in such a way that

a) the picture to be coded is at least partly divided into picture blocks;
b) the picture object is determined in the picture to be coded;
c) at least one object picture block is determined, the object picture block being a picture block which has at least one object pixel;
d) in which the determination of the object picture block is carried out in such a way that a relative position of an edge of an object picture block of the picture to be coded in relation to the picture corresponds to a relative position of an edge of an object picture block of the chronologically preceding picture in relation to the chronologically preceding picture;
e) in which the coding is carried out using the object picture block.

16. Use of the coded digitized picture according to Claim 15 for processing.

17. Use of the coded digitized picture according to Claim 15 for decoding.

18. Use of the coded digitized picture according to Claim 15 for transmission.

## Revendications

1. Procédé pour le codage d'une image numérisée à laquelle est attribuée une image précédente dans le temps correspondante et qui présente des points d'images et au moins un objet d'image avec des points d'images d'objet correspondants, les points d'images d'objet étant situés dans l'objet,

a) dans lequel on divise l'image, au moins partiellement, en blocs d'image;

b) dans lequel on détermine l'objet d'image dans cette image;

c) dans lequel on détermine au moins un bloc d'objet d'image, un bloc d'objet d'image étant un bloc d'image présentant au moins un point d'images d'objet;

d) dans lequel on détermine le bloc d'objet d'image de sorte qu'une position relative d'une marge d'un bloc d'objet d'image de l'image, par rapport à l'image, corresponde à une position relative d'une marge d'un bloc d'objet d'image de l'image précédente, par rapport à l'image précédente;

e) dans lequel on réalise le codage en employant le bloc d'objet d'image.

2. Procédé selon la revendication 1,
dans lequel l'image présente plusieurs objets d'image.

3. Procédé selon la revendication 1 ou 2,
dans lequel plusieurs positions relatives d'une marge d'un bloc d'objet d'image de l'image, par rapport à l'image, correspondent à chaque fois à une position relative d'une marge d'un bloc d'objet d'image de l'image précédente, par rapport à l'image précédente.

4. Procédé selon une quelconque des revendications 1 à 3,
dans lequel on met en oeuvre pour le codage un codage par transformation hybride.

5. Procédé pour le codage et pour le décodage d'une image numérisée à laquelle est attribuée une image précédente dans le temps correspondante et qui présente des points d'images et au moins un objet d'image avec des points d'images d'objet correspondants, les points d'images d'objet étant situés dans l'objet, dans lequel on procède au codage de l'image selon la revendication 1 et dans lequel on réalise le décodage en mettant en oeuvre un procédé inverse par rapport au codage.

6. Procédé selon la revendication 5,
dans lequel l'image présente plusieurs objets d'image.

7. Procédé selon la revendication 5 ou 6,
dans lequel plusieurs positions relatives d'une marge d'un bloc d'objet d'image de l'image, par rapport à l'image, correspondent à chaque fois à une position relative d'une marge d'un bloc d'objet d'image de l'image précédente, par rapport à l'image précédente.

8. Procédé selon une quelconque des revendications 5 à 7,
dans lequel on met en oeuvre pour le décodage un codage par transformation inverse.

9. Dispositif pour réaliser le procédé selon la revendication 1.

10. Dispositif selon la revendication 9,
dans lequel l'image présente plusieurs objets d'image.

11. Dispositif selon la revendication 9 ou 10,
dans lequel plusieurs positions relatives d'une marge d'un bloc d'objet d'image de l'image, par rapport à l'image, correspondent à chaque fois à une position relative d'une marge d'un bloc d'objet d'image de l'image précédente, par rapport à l'image précédente.

12. Dispositif pour réaliser le procédé selon la revendication 5.

13. Dispositif selon la revendication 12,
dans lequel l'image présente plusieurs objets d'image.

14. Dispositif selon la revendication 12 ou 13,
dans lequel plusieurs positions relatives d'une marge d'un bloc d'objet d'image de l'image, par rapport à l'image, correspondent à chaque fois à une position relative d'une marge d'un bloc d'objet d'image de l'image précédente, par rapport à l'image précédente.

15. Image numérisée codée qui présente des points d'images et au moins un objet d'image avec des points d'images d'objet correspondants, les points d'images d'objet étant situés dans l'objet, laquelle image numérisée codée étant générée par un codage d'une image numérisée destinés au codage, à laquelle image numérisée destinée au codage est attribuée une image précédente dans le temps correspondante et laquelle image numérisée codée a été codée de sorte que

a) on divise l'image destinée au codage, au moins partiellement, en blocs d'image;

b) on détermine l'objet d'image dans cette image destinée au codage;

c) on détermine au moins un bloc d'objet d'image, le bloc d'objet d'image étant un bloc d'image présentant au moins un points d'image d'objet;

d) on détermine le bloc d'objet d'image de sorte qu'au moins une position relative d'une marge d'un bloc d'objet d'image de l'image destinée au codage, par rapport à l'image, corresponde à une position relative d'une marge d'un bloc d'objet d'image de l'image précédente, par rapport à l'image précédente;

e) on réalise le codage en employant le bloc d'objet d'image.

**16.** Mise en oeuvre de l'image numérisée codée selon la revendication 15 pour un traitement.

**17.** Mise en oeuvre de l'image numérisée codée selon la revendication 15 pour un décodage.

**18.** Mise en oeuvre de l'image numérisée codée selon la revendication 15 pour une transmission.

# FIG 1

FIG 2

# FIG 3

# FIG 4